# EUROPEAN PATENT APPLICATION

(11) **EP 2 431 729 A1**
(43) Date of publication of application: **21.03.2012**
(21) Application number: 11185516.9
(22) Date of filing: 14.01.2011
(51) Int. Cl.: G01N 21/31, G01N 21/85, B01F 15/00, G01J 3/44

(54) **Spectrometric characterisation of heterogeneity**

(30) Priority: 15.01.2010 US 295688 P
(62) Divisional of application: 11702280.6
(71) Applicant: Malvern Instruments Limited, Malvern, Worcestershire WR14 1XZ (GB)
(72) Inventor: Lewis, Neil E., Brookeville, MD Maryland 20833 (US)
(74) Representative: Lawrence, John

(57) **Abstract**

A method for monitoring the heterogeneity of a sample comprises (i) collecting spectral signals from a plurality of sample regions during a first period; (ii) analysing the spectral signals collected during the first period to determine a statistical measure that is used to determine first information related to the chemical heterogeneity of the sample; (iii) collecting spectral signals from a plurality of sample regions during a second, later, period; (iv) analysing the spectral signals collected during the second period to determine a statistical measure that is used to determine second information related to the chemical heterogeneity of the sample; (v) using the first and second information related to the chemical heterogeneity of the sample to determine information related to changes in the chemical heterogeneity of the sample between the first and second time periods; and (vi) excluding one or more of the spectral signals collected during the first and/or second priod from subsequent analysis on the basis of predetermined test criteria and performing the analysis on the remaining spectral signals.

## Description

### Cross-Reference to Related Applications

This application is related to provisional application no. 60/860,345, filed on November 20, 2006, provisional application no. 60/993,141, filed on September 10, 2007, and non-provisional application no. 11/986,548, filed on November 20, 2007. These applications are all herein incorporated by reference.

### Field of the Invention

The present invention relates to a method and system for monitoring the heterogeneity of a sample, such as a pharmaceutical mixture.

### Background of the Invention

Spectrometric techniques have been applied to monitoring mixing processes, such as the mixing of pharmaceutical blends. One approach has been to take a series of single spectra of a blend through a window in a mixing vessel. Mixing can then be carried out until this single measurement reaches an end point. This method is simple to implement, but it provides the user with relatively little information about the distribution of components of the mixture.

Another approach has been to acquire a series of near-infrared chemical images of a blend in a mixing vessel. These images can then be analyzed to derive statistical properties, such as the mean, standard deviation, kurtosis, or skew of the distribution, as described in more detail in published US application no. US2004-0211861, which is herein incorporated by reference. This approach can provide more information about the distribution of mixture components than does the single-measurement approach, but it can be relatively expensive to implement.

### Summary of the Invention

According to a first aspect of the present invention, there is provided a method for monitoring the heterogeneity of a sample, comprising:
(i) collecting spectral signals from a plurality of sample regions during a first period;
(ii) analysing the spectral signals collected during the first period to determine a statistical measure that is used to determine first information related to the chemical heterogeneity of the sample;
(iii) collecting spectral signals from a plurality of sample regions during a second, later, period;
(iv) analysing the spectral signals collected during the second period to determine a statistical measure that is used to determine second information related to the chemical heterogeneity of the sample; and
(iv) using the first and second information related to the chemical heterogeneity of the sample to determine information related to changes in the chemical heterogeneity of the sample between the first and second time periods.

Conveniently, the sample regions from which spectral signals are collected during the first and second periods are the same. Alternatively, at least some of the sample regions from which spectral signals are collected during the first period are the same as those used during the second period. Alternatively, the sample regions from which spectral signals are collected during the first and second periods may be different.

Advantageously, the sample regions from which spectral signals are collected during the first and second periods are of different sizes.

Preferably, the statistical measure is one of a standard deviation, a mean value, a skew value and a kurtosis value.

Preferably, the method comprises repeating steps (iii) to (v) until it is determined that the change in the heterogeneity of the sample is less than a predetermined threshold value. Alternatively, the method may comprise repeating steps (iii) to (v) until it is determined that the absolute magnitude of the heterogeneity of the sample is less than a predetermined threshold value.

Preferably, the method comprises excluding one or more of the spectral signals collected during the first and/or second period from subsequent analysis on the basis of predetermined test criteria and performing the analysis on the remaining spectral signals. More preferably, the predetermined test criteria are statistical criteria. Alternatively, the predetermined test criteria may be a fluorescence threshold value and spectral signals are excluded from subsequent analysis in the event that they are determined to exceed the fluorescence threshold value.

The method may, advantageously comprise applying a weighting factor to spectral signals collected during the first and/or second period prior to determining the statistical measure.

Preferably, the method comprises:
before the first period, collecting spectral signals from the sample regions to be used during the first period and evaluating them against predetermined test criteria; and
excluding sample regions from those to be used during the first period in the event that the spectral signal collected therefrom fails to satisfy the predetermined test criteria.

According to a second aspect of the present invention, there is provided a system for monitoring the heterogeneity of a sample, comprising:
detecting means for collecting spectral signals from a plurality of sample regions on a sample;
control means arranged to cause the detecting means to collect spectral signals from a plurality of sample regions during a first period and to collect spectral signals from a plurality of sample regions during a second, later, period;
processing means arranged to analyse spectral signals collected by the detecting means during the first and second periods, to determine a statistical measure that is used to determine information related to the chemical heterogeneity of the sample during each of the first and second periods, and to use the information related to the chemical heterogeneity of the sample to determine information related to changes in the chemical heterogeneity of the sample between the first and second time periods.

Preferably, the detecting means comprises means for illuminating the sample and means for selectively isolating light from a sample region from which a spectral signal is to be collected.

More preferably, the means for isolating a sample region comprises a micromirror array or a scanning mirror.

Alternatively, the detecting means may comprise a sensor and the means for isolating a sample region comprises an optical fibre bundle having a first end disposed adjacent to the sample, the individual fibres of the bundle at the first end being disposed at spaced apart locations with respect to one another so as to define the plurality of sample regions, and a second end disposed adjacent to the sensor, the individual fibres of the bundle at the second end being disposed adjacent to one another in a line.

Conveniently, the means for illuminating the sample comprises a Fourier Transform (FT) interferometer.

Preferably, relative movement between the sample and the detecting means takes place during the first and/or second period or between the first and second period

According to a third aspect of the present invention, there is provided a spectroscopic method, comprising:
acquiring a plurality of separate spectral measurements at different locations on a sample,
evaluating results of the measurements based on one or more predetermined test criteria,
categorizing information from measurements made at the different locations based on results of the step of evaluating, and
reporting results that include information from both the step of acquiring and the step of categorizing.

Preferably, the step of categorizing comprises rejecting one or more measurements that fail to satisfy the predetermined test criteria.

Preferably, the step of categorizing comprises classifying the measurements into a plurality of discrete categories.

Preferably, the step of categorizing comprises associating the measurements with categorization information.

Preferably, the predetermined test criteria are statistical test criteria.

Preferably, the step of categorizing comprises:
retaining measurements for the locations that meet the predetermined test criteria; and
rejecting measurements for the locations that fail to meet the predetermined test criteria.

Preferably, the method comprises deriving one or more statistical properties of the categorized measurements.

More preferably, the step of deriving statistical properties comprises averaging the categorized measurements or obtaining a standard deviation for the categorized measurements or obtaining a kurtosis value for the categorized measurements or obtaining a skew value for the categorized measurements.

Preferably, the method comprises deriving one or more statistical properties of the categorized information. More preferably, the step of deriving statistical properties comprises averaging the categorized information.

Preferably, the step of acquiring includes acquiring scout measurements and test measurements and wherein the step of categorizing includes retaining information from test measurements at locations that satisfy the test criteria in the scout measurements.

Preferably, the measurements include Raman measurements. More preferably, the step of evaluating results of the measurements is adapted to detect fluorescence, and the step of categorizing is operative to reject measurements where fluorescence is detected. Even more preferably, the step of evaluating detects measurements that exceed a predetermined intensity threshold.

Conveniently, relative movement between the sample and the detector takes place to allow the detector to acquire the separate spectroscopic measurements from the different locations, and wherein preferably the sample is moved.

Advantageously, the steps of acquiring are performed using at least one moving, or scanning, mirror. Preferably, the scanning mirror images at least a portion of an illuminated area of the sample onto an aperture between the sample and the detector.

The steps of acquiring and deriving may be performed for a pharmaceutical mixture, a pharmaceutical product, a pharmaceutical intermediate or a pharmaceutical dosage unit.

Conveniently, the method is performed on a pharmaceutical mixture having a milled ingredient and the size of the samples is on the order of the milled ingredient size for the pharmaceutical mixture. Alternatively, the size of the samples may be on the order of the domain sizes of individual species of particles in a pharmaceutical mixture. The size of the samples may be on the order of 10 microns or on the order of 125 microns or the size of the samples may range from 0.5 microns to 1000 microns.

According to a fourth aspect of the present invention, there is provided a spectroscopic apparatus for monitoring heterogeneity of a sample, comprising:
a sampling detector operative to acquire sampled spectroscopic measurements distributed over a range of different locations in a sample,
a sequencer operative to cause the same sampling detector to successively acquire samples for each of a plurality of locations in the sample, and
a spectral processor operative to derive from the sampled spectroscopic measurements a statistical measure of chemical heterogeneity.

According to a fifth aspect of the present invention, there is provided a spectroscopic apparatus for monitoring heterogeneity of a sample, comprising:
means for acquiring sampled spectroscopic measurements distributed over a range of different locations in a sample,
means for causing the sampling detector to successively acquire samples for each of a plurality of locations in the sample, and
means for deriving from the sampled spectroscopic measurements a statistical measure of chemical heterogeneity.

According to a sixth aspect of the present invention, there is provided a spectroscopic apparatus for monitoring the heterogeneity of a sample, comprising:
detecting means operable to acquire a plurality of separate spectral measurements at different locations on a sample; and
processing means configured to evaluate results of the measurements based on one or more predetermined test criteria and, in dependence on the evaluation of results, to categorize information from measurements made at the different locations,
the processing means being further configured to report results that include information relating to the acquisition of the measurements and to the categorization of the measurements.

Preferably, the processing means is configured to categorize the measurements by retaining measurements for the locations that meet the predetermined test criteria, rejecting measurements for the locations that fail to meet the predetermined test criteria, and deriving one or more statistical properties of the categorized measurements.

Preferred and/or optional aspects of the method of the first aspect of the invention may be incorporated within the system of the second aspect, the method of the third aspect, the systems of the fourth and fifth aspects and the apparatus of the sixth aspect either alone or in appropriate combination.

### Brief Description of the Drawings

Embodiments of the present invention will now be described, by way of example only, with reference to the accompanying drawings, of which:
**Fig. 1** is a diagram of an illustrative embodiment of a spectrometric pharmaceutical heterogeneity characterization system according to the invention;
**Fig. 2** is a flowchart illustrating the operation of the system of Fig. 1;
**Fig. 3A** is a first illustrative sampling map for the system of Fig. 1;
**Fig. 3B** is a second illustrative sampling map for the system of Fig. 1;
**Fig. 4** is a diagram of a scanning-mirror implementation of a detector element for the system of Fig. 1;
**Fig. 5** is a diagram of a fiber-bundle implementation of a detector element for the system of Fig. 1;
**Fig. 6** is a series of micro distribution plots for a series of samples for the system of Fig. 1;
**Fig. 7** is a plot of average concentration for the samples shown in Fig. 6;
**Fig. 8** is a plot of macro distribution for the samples shown in Fig. 6;
**Fig. 9** is a first illustrative sampling map for a system employing differently sized sample locations; and
**Fig. 10** is a partial system diagram for an embodiment of the system that can produce sampling maps according to Fig. 9.

### Description of an Illustrative Embodiment

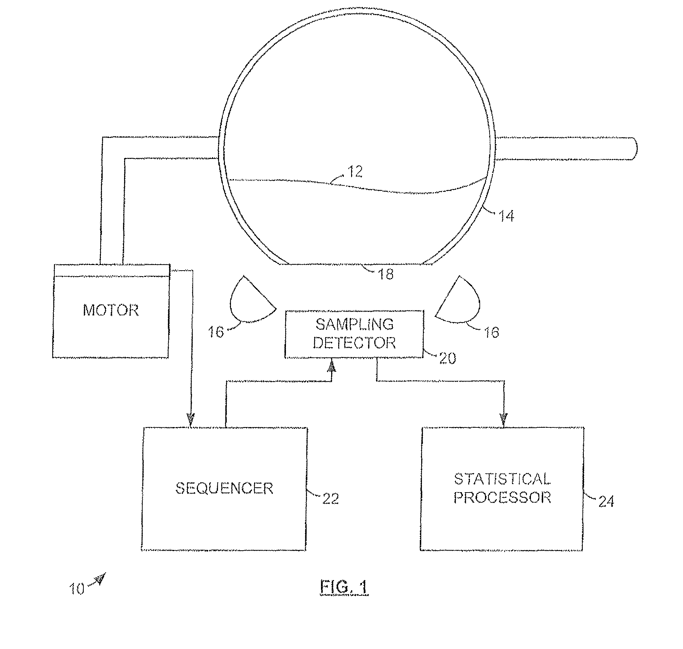

Referring to Fig. 1, an embodiment of a system 10 according to the invention is designed to characterize the mixing of a pharmaceutical powder blend 12 in a motor-driven mixing vessel 14, such as a V-blender. Other types of processing devices, such as hoppers or granulators, could also be accommodated. Additionally, other types of pharmaceutical mixtures or dosage units may be characterized, such as solid dosage forms (e.g. capsules or tablets), suspensions, or even mixtures of immiscible fluids.

The system 10 comprises one or more infrared illumination sources 16 directed toward a window 18 in the mixing vessel 14. One or more sampling detectors 20 are positioned near the mixing vessel 14 in such a way that they can acquire spectrometric samples through the window 18. A sequencer 22 is operable to trigger acquisitions by the sampling detector 20, and a statistical processor 24 is arranged to receive the acquired samples.

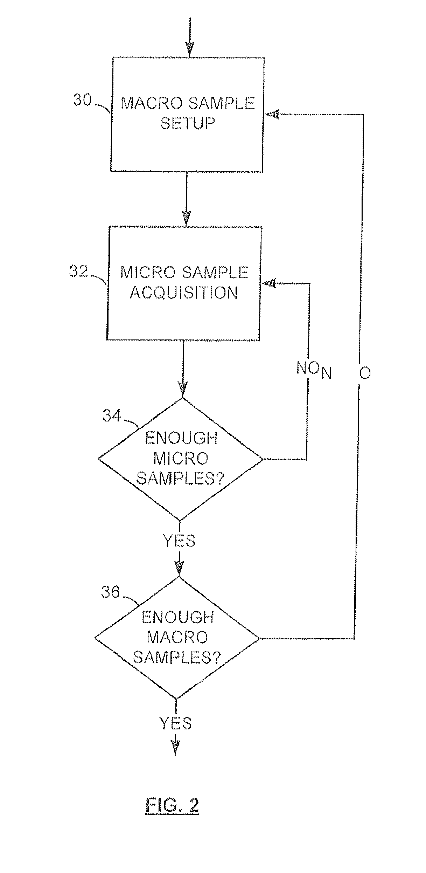

Referring to Fig. 2, the system 10 is first put in an initial macro-sampling state (step 30). In the present embodiment, the initial state is one where the blender window 18 is in front of the sampling detector 20. The system 10 then performs a series of micro-sample acquisitions (step 32) as explained in more detail below. Once the micro-sampling is complete (step 34), the system 10 mixes the blend until another macro-sampling state is reached, and the system 10 begins another series of micro-sampling acquisitions.

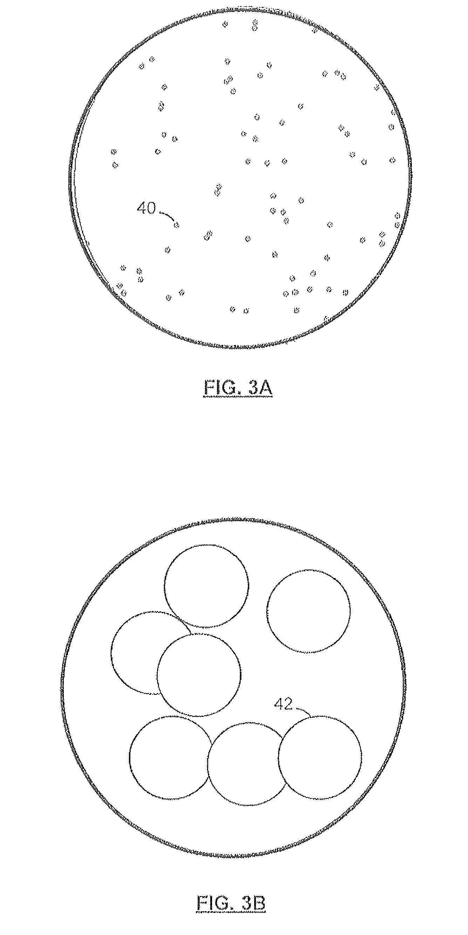

The acquisition process ends at the end of a final macro-sample (step 36). This can be the last of a predetermined number of macro-samples in a fixed sampling schedule. The system 10 can also stop the process for other reasons, such as once certain predetermined mixing characteristics have been achieved, or when an error condition is detected. Referring to Figs. 3A and 3B, the sampling detector 20 is operable to acquire a number of micro-samples at different locations in the sample during each macro-sample period. The system 10 can use one or more different types of sampling patterns, such as random patterns of non-overlapping samples 40 or overlapping samples 42. The sequencing of the acquisition of the samples is generally defined by the nature of the detector 20 and its sequencer 22.

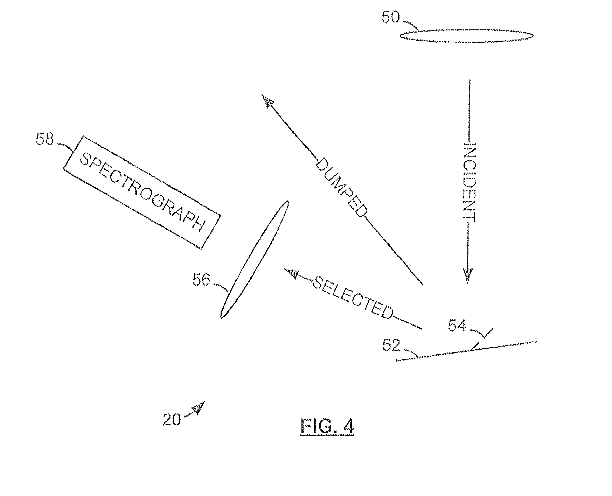

Referring to Fig. 4, one possible implementation of the sampling detector 20 that can perform the micro-sampling operations comprises a micromirror array. In this implementation, lamps at an oblique angle are used to illuminate the entire sampled area. A collection lens 50 images the sampled area onto a micromirror array 52, oriented so that in one state the mirrors reflect the incident light into a beam dump. In the other state the mirrors (see 54) reflect the light into a lens 56 which images the micromirror array onto the slit of a spectrograph 58 equipped with a diode array detector. Alternatively, the aperture may be imaged onto the round face of an optical fibre bundle, which is round at one end (the individual fibres of the bundle being grouped together, for example, such that the bundle has a substantially circular cross-section) and linear at the other end (the individual fibres being arranged adjacent to one another in a line), with the linear end serving as the slit for the spectrograph.

In a second implementation the sample to be characterized is illuminated as described above, but an optical system which includes a scanning mirror images a portion of the illuminated area onto an aperture. This aperture is then imaged onto the slit of the spectrograph or onto a fiber bundle as described above. The spatial resolution is determined by the size of the aperture projected through the collection optics onto the sample. The aperture may consist of an iris, slit, wedge or a small mirror, positioned to pick off only a small portion of the sample image.

In a third implementation the oblique illumination is provided by the modulated light from a Fourier Transform (FT) interferometer, and the micromirror array selectively images a portion of the illuminated area directly into a single element detector.

In a fourth implementation the illumination is provided by the modulated light from an FT interferometer, and an optical system which includes a scanning mirror images a portion of the illuminated area onto an aperture which is imaged directly onto a detector. In a fifth implementation a beamsplitter is used to couple a collimated broadband beam into the collection path. The light is telescoped down and sent through an aperture, which is imaged to a spot on the sample by an optical system which incorporates a scanning mirror. Light from that spot follows the same path back to the beamsplitter and is then focused onto the slit of a spectrograph.

As before, the collimated broadband illumination source can be the modulated output of a Michelson interferometer, in which case the spectrograph is replaced by a single element detector.

In another embodiment, instead of telescoping the illumination beam to the size of a small aperture, the entire collimated excitation beam can illuminate a micromirror array oriented so that a mirror in the 'on' state will direct a portion of the collimated incident beam to a corresponding spot on the sample, and the reflected light from that spot will be directed to the beamsplitter and then to either the slit of the spectrograph or into a detector in the case of FT illumination. The spot could also be brought to the sample through the use of an optical microscope.

In still another configuration, a spectrograph (or a detector for the case of FT modulated illumination) can be set up to collect light from a large area, and a small portion of that area can be illuminated oblique to the collection angle, either using a micromirror array or by again making use of the small aperture/scanning mirror-lens combination described earlier.

The detector 20 may comprise focusing optics, such as a movable lens, to focus the light reflected from the sample. In particular, the focusing optics may be employed in the case that the light reflected from two different sample regions travels two different distances from the sample to the detector.

Sampling at different locations can also be achieved by moving the material to be sampled instead of moving the sampling locations with respect to the instrument. A dosage unit could be rotated or tumbled, for example, in front of a single-point detector. An x-y stage could also be moved in a predetermined way, or randomly with respect to a detector, in order to acquire samples at different locations

Sampling can also take place from different vantage points. Different sample locations could be acquired from opposite sides of a tablet, for example, by different detectors, optical conduits, mirrors, or other suitable arrangements.

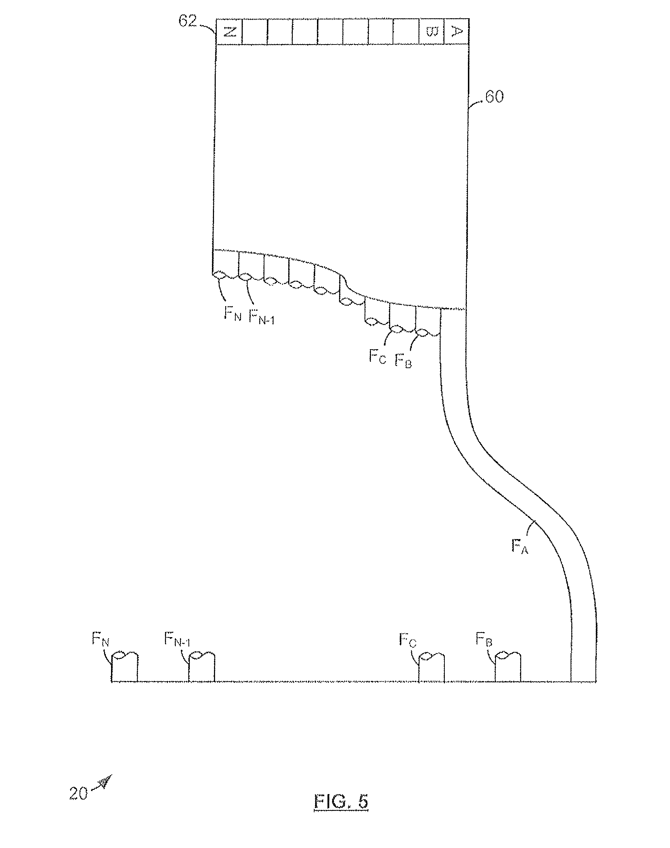

Referring to Fig. 5, another possible implementation of the sampling detector 20 employs an optical fibre bundle 60, with one end 62 positioned next to a relatively small one- or two-dimensional array. The fibres from the other end of the bundle are spread out and positioned to acquire micro-samples from different locations in the blend. Alternatively, broad area illumination could be imaged onto the face of a fibre bundle which is round at one end (i.e. with the individual optical fibres grouped together for example such that the bundle has a generally circular cross-section) and linear on the other end (i.e. with the individual optical fibres positioned adjacent to one another in a line). For FT illumination the linear end would be imaged directly onto a diode array. For unmodulated illumination the linear end would form the entrance slit of an imaging spectrograph, and a 2-D array detector would collect the spectral and spatial information on different axes.

By means of the above-described detector arrangements, it is possible to make a spectral measurement, i.e. collect a spectral signal, of a sample by detecting the light from an illumination source after it has been reflected off the sample. Each measurement or signal thus comprises a measurement of the intensity of the reflected light over a desired wavelength range.

The sequencing of acquisitions can take place in any suitable manner and may be controlled by a computer program or dedicated circuit or a combination of the two. It can also use other types of principles, such as optical, mechanical, or electro-optical principles. In the embodiment of Fig. 1, for example, the sequencer 22 may be operable to receive a position signal from a shaft encoder on the blender motor and to synchronize macro-sample acquisitions with the position of the blender. In some situations, the sequencer functions may even be impossible to isolate from the sampling detector 20. A sampling detector 20 that is designed with a suitable mechanical resonant frequency, for example, can be allowed to simply run free in the acquisition of micro-samples.

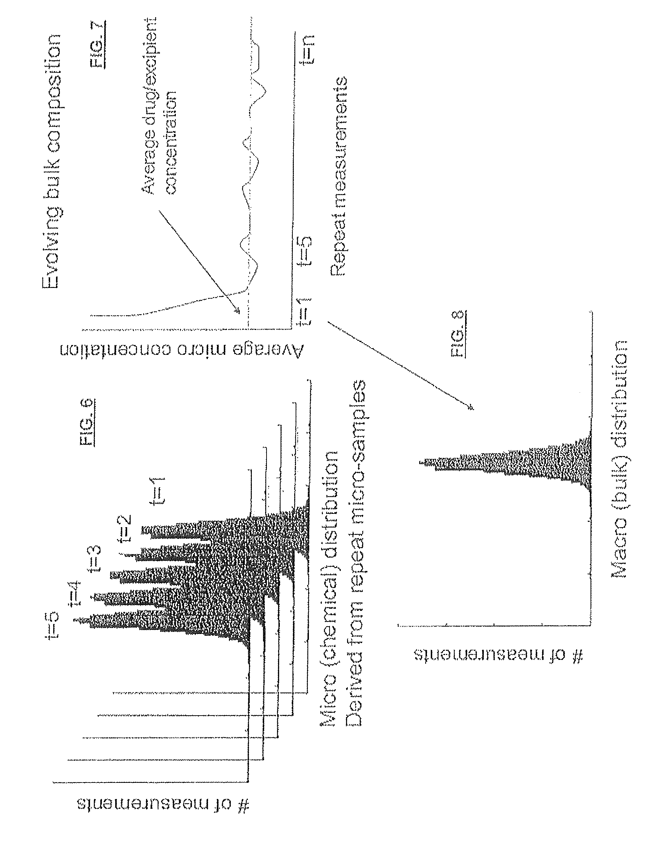

Referring to Fig. 6, as the mixing process proceeds, each set of micro-samples exhibits a different set of statistical properties. Typically, the standard deviation of the acquired spectra will narrow as the mixture becomes more uniform. The mean will also tend to shift, reflecting the distribution of all of the mixture components throughout the vessel. Accordingly, the statistical processor 24 may be operable to monitor a statistical parameter, such as the mean and/or the standard deviation, from macro-sample to macro-sample over a plurality of macro-samples. In this way, it is possible to monitor how the heterogeneity of the sample changes as the sample is mixed.

The statistical techniques performed by the statistical processor 24 can be applied to raw spectral data, or derived values, such as chemical or physical properties. The statistical properties can be computed as the micro-samples are being acquired and/or after a full run.

Referring to Fig. 7, the evolution of one or more of the statistical properties can be determined to characterize the process. This information can then be displayed to the user, and it can also be used in a variety of other ways, such as to decide whether a mixture has reached an end point. The mixing process and/or the acquisition of measurements can be controlled in response to changes in the statistical properties, and the control of the mixing process and/or acquisition could be to end the process and/or acquisition if it is determined that the process has ended. As shown in Fig. 8, the statistical information from the micro-macro-sampling process can also be presented as overall bulk distribution statistics.

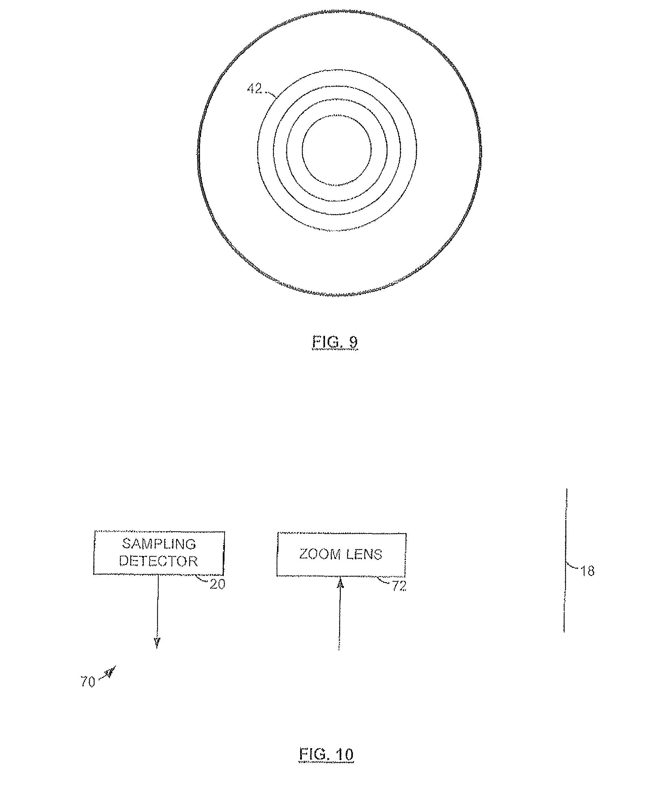

Referring to Fig. 9, the system 10 can also acquire samples of differently sized micro locations. These micro locations can be concentric 42 or otherwise overlapping, or they can be distributed around the sample.

Referring to Fig. 10, one approach to acquiring samples from differently sized micro locations is to introduce an electrically controlled zoom lens between the detector 20 and window 18 or other sample target. In this embodiment, the modified system 70 alternates between acquiring a measurement and adjusting the magnification of the zoom lens to assemble a series of measurements corresponding to differently sized micro locations. Such a series could also be obtained in a variety of other ways. For example, the system 10 could illuminate different amounts of the sample, actuate different numbers of mirrors in a mirror array, and/or acquire light from different numbers of fibres.

Acquiring measurements from differently sized locations can provide additional information about the distribution of particles in a sample. Measurements over large areas will generally be representative of a number of different particles and will therefore reflect an average for these particles. Measurements over areas that are similar in size to individual particles will tend to reflect a single species. As the size of the sample location decreases in a series of measurements, therefore, the acquired spectrum will generally evolve from showing a mixture of species to showing just spectral features corresponding to an individual species. Chemometric analysis techniques can also be applied to the series of measurements to derive more detailed information about particle size and relative ingredient concentrations.

Referring to Fig. 11, the system 10 can also test and classify micro-sample measurements for one or more macro-samples. This can be useful in improving the accuracy of results from a variety of types of independent or macro-sampled measurements. The tests can be statistical, such as to exclude small numbers of outliers. For example, following a macro-sample run in which a plurality of micro-samples are collected, the micro-samples can be analysed to determine whether they each lie within a range of acceptable results, e.g. within 3 standard deviations of a mean measurement. Thus, where erroneous measurements occur, these can be disregarded thereby increasing the accuracy of the macro-sample measurement. The tests can also be designed to exclude measurements arising from particular predetermined kinds of situations, such as where a small number of fluorescing contaminant particle samples 40A swamp out the others in a Raman measurement. Other suitable types of tests could be developed by one of ordinary skill in the art to improve measurements in a variety of different situations based on the specific conditions in which they are to be taken.

Referring to Fig. 12, the system 10 begins by acquiring a micro-sample (step 32). This sample is then evaluated (step 80). This evaluation can be based on any of a number of different criteria. In the case of a Raman measurement, for example, the evaluation can be designed to detect an unusually high intensity level so that small amounts of fluorescing contaminants can be excluded from a final average of micro-samples.

If the micro-sample meets the test criteria it is classified as passing (step 84). If the micro-sample does not meet the test criteria it is categorized as failing (step 86). The categorization of measurements can range from a simple pass/fail determination to a more complex multi-class categorization, or even a continuous categorization. The categorization process may be performed in a variety of ways, such as retaining or discarding sample measurement values, storing different types of sample measurements in different parts of a data structure, or associating categorization information with each sample.

This categorization technique can be used in situations where one or more macro-samples are desired (see step 34). It is also possible to perform separate macro-sample runs for evaluation and final measurement purposes. A first scout pass might be performed to find outliers, for example, with a second pass then being performed to acquire measured values. The scout pass could be performed in a different way than the measurement pass (e.g., more quickly or with a different measurement range).

The categorized micro-sample data set can then be reported to the user or to another system component. This reporting step provides information from the measurement and its categorization. For example, it can include passing samples and exclude failing samples, it can weight some of the samples more heavily, or it can include categorization information associated with one or more the samples that can be used as a figure of merit.

The techniques described above can also be applied to determine the uniformity of a pharmaceutical compound that is in the form of dosage units, e.g. pills, capsules, powders. This approach can allow the system to acquire information about the uniformity of the mixture within each unit and/or across a lot of units, and the sampling can take place before or after the dosage units are packaged in transparent blister packs. Relevant techniques for this type of measurement can be found in US Pat. No. 6,690,464, which is herein incorporated by reference. Staining techniques may also help to enhance the information received from some experimental runs. These techniques are described in US application no. 11/265,796, published under WO2006044861, and herein incorporated by reference. Moreover, while the techniques presented above have been developed for use in the characterization of pharmaceuticals, they may also be applicable to other types of products, such as cosmetics or nutritional supplements. Coated goods, drug delivery systems, medical devices, and composite materials may also be inspected using systems according to the invention.

The spectral measurements are, in the examples described taken in reflection, but it is possible that other systems may take measurements of light transmitted through the sample.

The spectral measurements may be taken over a range of wavelengths. It is possible to envisage a system where measurements are taken at one or more discrete wavelengths (possibly using a filter).

It will be appreciated by the person skilled in the art that whilst the embodiments of the the present invention described above relate to monitoring/determining the heterogeneity of a sample, they can equally be applied to monitoring/determining the homogeneity or degree of uniformity of a sample.

The present invention has now been described in connection with a number of specific embodiments thereof. However, numerous modifications which are contemplated as falling within the scope of the present invention should now be apparent to those skilled in the art. It is therefore intended that the scope of the present invention be limited only by the scope of the claims appended hereto. In addition, the order of presentation of the claims should not be construed to limit the scope of any particular term in the claims.

## Claims

1. A method for monitoring the heterogeneity of a sample, comprising:
(i) collecting spectral signals from a plurality of sample regions during a first period;
(ii) analysing the spectral signals collected during the first period to determine a statistical measure that is used to determine first information related to the chemical heterogeneity of the sample;
(iii) collecting spectral signals from a plurality of sample regions during a second, later, period;
(iv) analysing the spectral signals collected during the second period to determine a statistical measure that is used to determine second information related to the chemical heterogeneity of the sample;
(v) using the first and second information related to the chemical heterogeneity of the sample to determine information related to changes in the chemical heterogeneity of the sample between the first and second time periods; and
(vi) excluding one or more of the spectral signals collected during the first and/or second period from subsequent analysis on the basis of predetermined test criteria and performing the analysis on the remaining spectral signals.

2. A method according to claim 1, wherein the predetermined test criteria are statistical criteria, or
the predetermined test criteria is a fluorescence threshold value and spectral signals are excluded from subsequent analysis in the event that they are determined to exceed the fluorescence threshold value.

3. A method according to claim 1 or claim 2, comprising applying a weighting factor to spectral signals collected during the first and/or second period prior to determining the statistical measure.

4. A method according to claim 1, claim 2, or claim 3, comprising:
before the first period, collecting spectral signals from the sample regions to be used during the first period and evaluating them against predetermined test criteria; and
excluding sample regions from those to be used during the first period in the event that the spectral signal collected therefrom fails to satisfy the predetermined test criteria.

5. A spectroscopic method, including:
acquiring a plurality of separate spectral measurements at different locations on a sample,
evaluating results of the measurements based on one or more predetermined test criteria,
categorizing information from measurements made at the different locations based on results of the step of evaluating, and
reporting results that include information from both the step of acquiring and the step of categorizing.

6. The method of claim 5 wherein the step of categorizing is performed by rejecting one or more measurements that fail to satisfy the predetermined test criteria, and/or
wherein the step of categorizing is performed by classifying the measurements into a plurality of discrete categories, and/or
wherein the step of categorizing is performed by associating the measurements with categorization information.

7. The method of claim 5 or claim 6, wherein the predetermined test criteria are statistical test criteria.

8. The method of claim 5, claim 6 or claim 7, wherein the step of categorizing includes the steps of
retaining measurements for the locations that meet the predetermined test criteria; and
rejecting measurements for the locations that fail to meet the predetermined test criteria; and
the method preferably further includes the step of deriving one or more statistical properties of the categorized measurements.

9. The method of claim 8 wherein the step of deriving statistical properties includes a step of averaging the categorized measurements, or
wherein the step of deriving statistical properties includes a step of obtaining a standard deviation for the categorized measurements, or
wherein the step of deriving statistical properties includes a step of obtaining a kurtosis value for the categorized measurements, or
wherein the step of deriving statistical properties includes a step of obtaining a skew value for the categorized measurements.

10. The method of claim 8 further including the step of deriving one or more statistical properties of the categorized information and, preferably,
wherein the step of deriving statistical properties includes a step of averaging the categorized information.

11. The method of any one of claims 5 to 10 wherein the step of acquiring includes acquiring scout measurements and test measurements and wherein the step of categorizing includes retaining information from test measurements at locations that satisfy the test criteria in the scout measurements.

12. The method of any one of claims 5 to 11 wherein the measurements include Raman measurements and, preferably,
wherein the step of evaluating results of the measurements is adapted to detect fluorescence, and the step of categorizing is operative to reject measurements where fluorescence is detected and, preferably,
wherein the step of evaluating detects measurements that exceed a predetermined intensity threshold.

13. The method of any one of claims 5 to 12 wherein relative movement between the sample and the detector takes place to allow the detector to acquire the separate spectroscopic measurements from the different locations, and wherein preferably the sample is moved.

14. The method of any one of claims 5 to 13 wherein the steps of acquiring are performed using at least one moving, or scanning, mirror and, preferably,
wherein the scanning mirror images at least a portion of an illuminated area of the sample onto an aperture between the sample and the detector.

15. The method of any one of claims 5 to 14, wherein the steps of acquiring and deriving are performed for a pharmaceutical mixture.

16. The method of claim 15 wherein the steps of acquiring and deriving are performed for a pharmaceutical product, or
wherein the steps of acquiring and deriving are performed for a pharmaceutical intermediate; or
wherein the steps of acquiring and deriving are performed for a pharmaceutical dosage unit.

17. The method of claim 15 performed on a pharmaceutical mixture having a milled ingredient, and wherein the size of the samples is on the order of the milled ingredient size for the pharmaceutical mixture, or
wherein the size of the samples is on the order of the domain sizes of individual species of particles in the pharmaceutical mixture.

18. The method of any one of claims 5 to 15 wherein the size of the samples is on the order of 10 microns, or
wherein the size of the samples is on the order of 125 microns, or
wherein the size of the samples ranges from 0.5 microns to 1000 microns.

19. A spectroscopic apparatus for monitoring the heterogeneity of a sample, comprising:
detecting means operable to acquire a plurality of separate spectral measurements at different locations on a sample; and
processing means configured to evaluate results of the measurements based on one or more predetermined test criteria and, in dependence on the evaluation of results, to categorize information from measurements made at the different locations,
the processing means being further configured to report results that include information relating to the acquisition of the measurements and to the categorization of the measurements.

20. An apparatus according to claim 19, the processing means being configured to categorize the measurements by retaining measurements for the locations that meet the predetermined test criteria, rejecting measurements for the locations that fail to meet the predetermined test criteria, and deriving one or more statistical properties of the categorized measurements.
